# EUROPEAN PATENT APPLICATION

(11) **EP 3 539 925 A1**
(43) Date of publication of application: **18.09.2019**
(21) Application number: 17868819.8
(22) Date of filing: 08.11.2017
(51) Int. Cl.: C01B 25/45, H01B 1/06, H01M 10/0562

(54) **LITHIUM-CONTAINING ZIRCONIUM PHOSPHATE, CALCINED POWDER OF SAME, AND METHOD FOR PRODUCING SINTERED BODY**

(30) Priority: 09.11.2016 JP 2016219188
(71) Applicant: Daiichi Kigenso Kagaku Kogyo Co., Ltd., Osaka-shi, Osaka 559-0025 (JP); National Institute of Technology, Hachioji-shi, Tokyo 193-0834 (JP)
(72) Inventor: NAKAJIMA, Yasushi, Osaka-shi Osaka 559-0025 (JP); NAKAYAMA, Susumu, Niihama-shi Ehime 792-8580 (JP)
(74) Representative: Hoffmann Eitle
(86) International application number: PCT/JP2017/040233
(87) International publication number: WO 2018/088424

(57) **Abstract**

Provided is a lithium-containing zirconium phosphate having excellent high-temperature resistance and mechanical strength, which is useful as a lithium-ion-conducting inorganic solid electrolyte material, and methods for producing a calcined powder and a sintered body thereof. Specifically, the lithium-containing zirconium phosphate is characterized in that (1) the lithium-containing zirconium phosphate has a compositional ratio of Li:M¹:M²:P=1.0 to 1.7:0.10 to 0.35:2.0:more than 3.00 to 3.50 or less; (2) M¹ contains at least one member selected from the group consisting of Ca, Mg, Sr, and Ba; when M¹ contains two or more members, the ratio of M¹ is 0.10 to 0.35 in total; and (3) M² contains Zr alone, or contains Zr and at least one member selected from the group consisting of Al, Sc, Y, La, Pr, Nd, Sm, Eu, Gd, Tb, Dy, Ho, Er, Tm, Yb, and Lu, the ratio of Zr in M² being 1.47 to 2.00.

## Description

### Technical Field

The present invention relates to lithium-containing zirconium phosphate, which is useful as a lithium-ion-conducting solid electrolyte material for all-solid batteries, and to a method for producing a calcined powder of the lithium-containing zirconium phosphate and a method for producing a sintered body of the lithium-containing zirconium phosphate.

### Background Art

Lithium-ion batteries used in portable electronic devices, such as cellular phones and laptop computers, have advantages in energy density over other batteries. Thus, against the backdrop of global warming, there have been studies on the application of lithium-ion batteries in electric vehicles and hybrid vehicles, which use secondary batteries as a power source. Current commercially available lithium-ion secondary batteries mainly use an organic electrolyte for their electrolyte. However, these batteries have liquid leakage and corrosion issues, and are also combustible.

An alternative lithium-ion-conducting material is an inorganic solid electrolyte that contains zirconium phosphate. Inorganic solid electrolytes are chemically and electrochemically safer materials than organic electrolytes, and have a high potential of becoming commercially viable materials.

However, phosphate compounds, such as zirconium phosphate, are reported as undergoing thermal decomposition at a high temperature of 1200°C or higher, allowing phosphorus (P) content to evaporate (PTL 1). After being subjected to heat treatment, for example, at 1400°C for 100 hours, sodium zirconium phosphate loses 36% of its weight. Phosphate compounds formed with an alkaline earth metal of specific composition are also reported as degrading in a thermal-cycling degradation test when the temperature is increased and decreased, for example, between 100°C and 1260°C.

PTL 1 teaches that a high-temperature-type phosphate compound that has a composition of RZr₄(PO₄)₆ wherein R is one or more cations of group IIa in the periodic table and that has a crystalline structure having R3c symmetry was obtained by keeping a sintered body with a composition of RZr₄(PO₄)₆ wherein R is one or more cations of group IIa in the periodic table at a phase transition temperature or higher, and quenching it; and that the phosphate compound exhibited low-thermal expansion properties, without thermal expansion or thermal contraction.

However, this phosphate compound is prepared by a production method using a mixing technique with starting materials such as (ZrO)₂P₂O₇, ZrP₂O₇, RCO₃, ZrO₂, R₂HPO₄, and NH₄H₂PO₄. Thus, an impurity phase other than the target crystalline phase forms in the sintered body, increasing the size of the sintered body in a thermal cycling degradation test; additionally, changes in thermal expansion coefficient or low strength of the sintered body may result.

PTL 2 discloses a sintered-type, all-solid battery that has good capacity characteristics to ensure a large capacity in use in a high-temperature atmosphere, and that has good storage stability to minimize the degradation of battery characteristics. Claim 9 of PTL 2 discloses, regarding the composition of the solid electrolyte material, that the main component is represented by the formula LiₓM1_{y}M2_{z}(PO₄)₃, with the proviso that M1 contains at least one member selected from Ti, Ge, and Zr; M2 contains at least one member selected from Mg, Ca, Ba, Al, Cr, In, Sc, Y, and Hf; and x, y, z respectively satisfy 0.5≤x≤4, 0.5≤y≤2, and 0≤z≤1.5.

PTL 2 nowhere teaches a predetermined compositional range without particularly defining the phosphoric acid concentration (composition), or appears to not focus on the phosphoric acid concentration.

### Citation List

### Patent Literature

PTL 1: JPH03-208807A
PTL 2: JP2015-065021A

### Summary of Invention

### Technical Problem

An object of the present invention is to provide a lithium-containing zirconium phosphate having excellent high-temperature resistance and mechanical strength, which is useful as a lithium-ion-conducting inorganic solid electrolyte material, and to provide methods for producing a calcined powder and a sintered body of the lithium-containing zirconium phosphate.

### Solution to Problem

The present inventors conducted extensive research to achieve the object, and found that a lithium-containing zirconium phosphate whose constituents are present at a specific compositional ratio obtained by a specific production method can achieve the object, and completed the present invention.

Specifically, the present invention relates to the following lithium-containing zirconium phosphate, and methods for producing a calcined powder and a sintered body of the lithium-containing zirconium phosphate.
1. A lithium-containing zirconium phosphate, characterized in that
   (1) the lithium-containing zirconium phosphate has a compositional ratio of Li:M¹:M²:P=1.0 to 1.7:0.10 to 0.35:2.0:more than 3.00 to 3.50 or less;
   (2) M¹ contains at least one member selected from the group consisting of Ca, Mg, Sr, and Ba; when M¹ contains two or more members, the ratio of M¹ is 0.10 to 0.35 in total; and
   (3) M² contains Zr alone, or contains Zr and at least one member selected from the group consisting of Al, Sc, Y, La, Pr, Nd, Sm, Eu, Gd, Tb, Dy, Ho, Er, Tm, Yb, and Lu, the ratio of Zr in M² being 1.47 to 2.00.
2. The lithium-containing zirconium phosphate according to Item 1, wherein the lithium-containing zirconium phosphate has a compositional ratio of Li:M¹:M²:P=1.1 to 1.6:0.15 to 0.35:2.0:3.05 to 3.50.
3. The lithium-containing zirconium phosphate according to Item 1 or 2, wherein when the lithium-containing zirconium phosphate in a powder form is heated at a temperature increase rate of 10°C/minute in air atmosphere, the total weight loss of Li and P is less than 1.0 wt.% within the entire temperature range from room temperature, which is a start point, to 1500°C, which is an end point.
4. The lithium-containing zirconium phosphate according to any one of Items 1 to 3, wherein the lithium-containing zirconium phosphate has a resistivity of 100000 Ω·cm or less at room temperature.
5. The lithium-containing zirconium phosphate according to any one of Items 1 to 4, wherein the lithium-containing zirconium phosphate has a three-point bending strength of 20 MPa or more.
6. A method for producing a calcined powder of a lithium-containing zirconium phosphate, characterized in that
   (1) the calcined powder has a compositional ratio of Li:M¹:M²:P=1.0 to 1.7:0.10 to 0.35:2.0:more than 3.00 to 3.50 or less;
   (2) M¹ contains at least one member selected from the group consisting of Ca, Mg, Sr, and Ba; when M¹ contains two or more members, the ratio of M¹ is 0.10 to 0.35 in total;
   (3) M² contains Zr alone, or contains Zr and at least one member selected from the group consisting of Al, Sc, Y, La, Pr, Nd, Sm, Eu, Gd, Tb, Dy, Ho, Er, Tm, Yb, and Lu, the ratio of Zr in M² being 1.47 to 2.00; and
   (4) the method comprises mixing powdery starting materials containing inorganic compounds that are a Li source, a M¹ source, a M² source, and a P source, and calcining the obtained mixture of the powdery starting materials at a temperature of 800°C or higher.
7. A method for producing a sintered body of the lithium-containing zirconium phosphate of any one of Items 1 to 5, the method comprising
   preparing a calcined powder by the method for producing a calcined powder of Item 6,
   molding the calcined powder, and
   sintering the molded calcined powder at 800 to 1500°C to prepare a sintered body.

### Advantageous Effects of Invention

The lithium-containing zirconium phosphate according to the present invention is excellent in high-temperature resistance and mechanical strength, and is useful as a lithium-ion-conducting inorganic solid electrolyte material. The method for producing a sintered body of a lithium-containing zirconium phosphate according to the present invention is suitable for producing the lithium-containing zirconium phosphate that has the characteristics described above according to the present invention.

### Brief Description of Drawings

Fig. 1 illustrates a powder X-ray diffraction pattern of the lithium-containing zirconium phosphate obtained in Example 1-4 at room temperature.
Fig. 2 illustrates a complex impedance plot of the lithium-containing zirconium phosphate obtained in Example 1-4 at 25°C.
Fig. 3 illustrates a complex impedance plot of the lithium-containing zirconium phosphate obtained in Example 8-23 at 25°C.
Fig. 4 illustrates a change in total weight loss of Li and P observed within the entire temperature range from room temperature (start point) to 1500°C (end point) in thermogravimetric analysis of the lithium-containing zirconium phosphate obtained in Example 1-4, when the lithium-containing zirconium phosphate in a powder form was heated at a temperature increase rate of 10°C/minute in air atmosphere within that range of temperature.

### Description of Embodiments

The lithium-containing zirconium phosphate according to the present invention (the sintered body or its powder) is characterized in that
(1) the lithium-containing zirconium phosphate has a compositional ratio of Li:M¹:M²:P=1.0 to 1.7:0.10 to 0.35:2.0:more than 3.00 to 3.50 or less;
(2) M¹ contains at least one member selected from the group consisting of Ca, Mg, Sr, and Ba; when M¹ contains two or more members, the ratio of M¹ is 0.10 to 0.35 in total; and
(3) M² contains Zr alone, or contains Zr and at least one member selected from the group consisting of Al, Sc, Y, La, Pr, Nd, Sm, Eu, Gd, Tb, Dy, Ho, Er, Tm, Yb, and Lu, the ratio of Zr in M² being 1.47 to 2.00.

In this specification, unless indicated otherwise, "A to B" refers to "A or more and B or less." For example, "1 to 5" refers to "1 or more and 5 or less." In this specification, "room temperature" refers to "15 to 35°C" designated as a standard ambient condition used in measurement and testing in Japanese Industrial Standards (JIS C 60068-1), and refers to, for example, "25°C."

The lithium-containing zirconium phosphate that has the characteristics described above according to the present invention is excellent in high-temperature resistance and mechanical strength, and is useful as a lithium-ion-conducting inorganic solid electrolyte material. This lithium-containing zirconium phosphate according to the present invention is obtained by mixing powdery starting materials containing inorganic compounds that are a Li source, a M¹ source, a M² source, and a P source; calcining the obtained mixture of the powdery starting materials at a temperature of 800°C or higher to obtain a calcined powder; molding the calcined powder; and sintering the molded calcined powder at 800 to 1500°C (optionally including pulverization after sintering).

The following explains the method for producing a calcined powder, and the method for producing a sintered body, followed by explanation of the characteristics of the lithium-containing zirconium phosphate (the sintered body or its powder).

### Method for Producing Calcined Powder of Lithium-containing Zirconium Phosphate

The method for producing a calcined powder of a lithium-containing zirconium phosphate according to the present invention (which may hereinafter be referred to as "the method for producing a calcined powder") has the following characteristics:
(1) the calcined powder has a compositional ratio of Li:M¹:M²:P=1.0 to 1.7:0.10 to 0.35:2.0:more than 3.00 to 3.50 or less;
(2) M¹ contains at least one member selected from the group consisting of Ca, Mg, Sr, and Ba; when M¹ contains two or more members, the ratio of M¹ is 0.10 to 0.35 in total; and
(3) M² contains Zr alone, or contains Zr and at least one member selected from the group consisting of Al, Sc, Y, La, Pr, Nd, Sm, Eu, Gd, Tb, Dy, Ho, Er, Tm, Yb, and Lu, the ratio of Zr in M² being 1.47 to 2.00; and
(4) the method comprises mixing powdery starting materials containing inorganic compounds that are a Li source, a M¹ source, a M² source, and a P source, and calcining the obtained mixture of the powdery starting materials at a temperature of 800°C or higher.

The powdery starting materials for use include inorganic compounds.

The Li source for use includes inorganic compounds that contain Li. Examples include at least one member selected from the group consisting of LiOH, LiOH·H₂O, Li₂CO₃, and LiNO₃.

The M¹ source is a source of at least one member of Ca, Mg, Sr, and Ba, and the M¹ source for use includes inorganic compounds that contain these elements. Examples include at least one member selected from the group consisting of MgO, CaCO₃, SrCO₃, and BaCO₃.

The M² source is a source of, in addition to the essential element Zr, optionally contained, at least one member of Al, Sc, Y, La, Pr, Nd, Sm, Eu, Gd, Tb, Dy, Ho, Er, Tm, Yb, and Lu. The essential Zr source for use includes inorganic compounds that contain Zr. Examples include at least one member selected from the group consisting of H₂Zr₃, ZrO₂, ZrOCl₂, and Zr(SO₄)₂. The optional components for use include inorganic compounds that contain the elements listed above. Examples include at least one member selected from the group consisting of Al₂O₃, Sc₂O₃, Y₂O₃, La₂O₃, Pr₆O₁₁, Nd₂O₃, Sm₂O₃, Eu₂O₃, Gd₂O₃, Tb₄O₇, Dy₂O₃, Ho₂O₃, Er₂O₃, Tm₂O₃, Yb₂O₃, and Lu₂O₃.

The P source for use includes inorganic compounds that contain P. Examples include at least one member selected from the group consisting of H₃PO₄, Li₃PO₄, and H₃PO₂.

The mixture ratio of the Li source, the M¹ source, the M² source, and the P source is not particularly limited as long as the compositional ratio after calcination (and after sintering) is Li:M¹:M²:P=1.0 to 1.7:0.10 to 0.35:2.0:more than 3.00 to 3.50 or less. The compositional ratio of M¹ refers to the ratio of M¹ in total in the case that M¹ contains two or more elements. Of the compositional ratio of M², the compositional ratio of Zr is 1.47 to 2.00, and preferably 1.50 to 2.00. The compositional ratio of P is 3.01 to 3.50, more preferably 3.03 to 3.50, and most preferably 3.05 to 3.50.

Of the range of the compositional ratio described above, the compositional ratio of Li:M¹:M²:P is preferably 1.1 to 1.6:0.15 to 0.35:2.0:3.05 to 3.50 from the standpoint of higher electroconductivity.

To mix starting materials, a known stirrer, such as a pot mill, may be used. The mean particle size of each powdery starting material is not limited, and is preferably about 0.3 to 20 µm. The mean particle size in this specification refers to a value as measured by laser diffractometry.

The temperature at which the mixture of the powdery starting materials is calcined is 800°C or higher. The temperature can be freely determined within the range of 800°C or higher, as long as the calcination temperature can prevent the mixture from being sintered. Typically, the temperature is preferably the sintering temperature described later or below (or below the sintering temperature). The calcination time can be suitably adjusted according to the calcination temperature. The calcination atmosphere is not limited, and is typically air atmosphere.

The calcined powder of a lithium-containing zirconium phosphate obtained by calcination preferably has a nasicon-type crystalline structure for the main constituent phase, which is determined by powder X-ray diffraction measurement. The nasicon structure (crystalline structure) of the calcined powder is maintained after the powder is sintered.

### Method for Producing Sintered Product of Lithium-containing Zirconium Phosphate

A sintered body is obtained by preparing a calcined powder by the method for producing a calcined powder described above, molding the calcined powder, and sintering the molded calcined powder at 800 to 1500°C. The calcined powder is molded with a known pressing machine, such as a mold press or CIP, at a pressure of 50 to 250 MPa, and formed into a shape of, for example, pellets.

The sintering temperature may be 800 to 1500°C; of the range, the sintering temperature is preferably 900 to 1400°C. The sintering atmosphere is not limited, and is typically air atmosphere.

The sintered body obtained by sintering as described above may optionally be pulverized into a powder.

### Characteristics of Lithium-containing Zirconium Phosphate (Sintered Product or Its Powder)

The lithium-containing zirconium phosphate according to the present invention obtained by the method for producing a sintered body described above has the following characteristics:
(1) the lithium-containing zirconium phosphate has a compositional ratio of Li:M¹:M²:P=1.0 to 1.7:0.10 to 0.35:2.0:more than 3.00 to 3.50 or less;
(2) M¹ contains at least one member selected from the group consisting of Ca, Mg, Sr, and Ba; when M¹ contains two or more members, the ratio of M¹ is 0.10 to 0.35 in total; and
(3) M² contains Zr alone, or contains Zr and at least one member selected from the group consisting of Al, Sc, Y, La, Pr, Nd, Sm, Eu, Gd, Tb, Dy, Ho, Er, Tm, Yb, and Lu, the ratio of Zr in M² being 1.47 to 2.00. The lithium-containing zirconium phosphate according to the present invention preferably has a nasicon-type crystalline structure for the main constituent phase, which is determined by powder X-ray diffraction measurement.

The lithium-containing zirconium phosphate according to the present invention is excellent in high-temperature resistance and mechanical strength, and is useful as a lithium-ion-conducting inorganic solid electrolyte material.

The high-temperature resistance means the total weight loss of Li and P that occurs when the lithium-containing zirconium phosphate in a powder form is heated at a temperature increase rate of 10°C/minute in air atmosphere. In a preferable embodiment, the total weight loss of Li and P is less than 1.0 wt.%, and more preferably 0.6 wt.% or less, within the entire temperature range from room temperature, which is the start point, to 1500°C, which is the end point. The weight loss in this specification refers to a value as calculated based on the thermogravimetric measurement with a differential thermal scale (TG-DTA8120, Rigaku Corporation) within the temperature range from room temperature to 1500°C (at a temperature increase rate of 10°C/minute in air atmosphere).

Regarding the mechanical strength, the lithium-containing zirconium phosphate according to the present invention has a three-point bending strength of 20 MPa or more, and more preferably 21 MPa or more in a preferable embodiment. The three-point bending strength in this specification refers to a value as measured in accordance with a testing method for bending strength of fine ceramics (JIS R1601).

The resistivity at room temperature in a preferable embodiment is 100000 Ω·cm or less, and more preferably 99900 Ω·cm or less. The room-temperature resistivity in this specification was determined as follows. A pellet sample of a sintered body was prepared from a calcined powder (particle size: about 0.3 to 10 µm, and preferably about 0.3 to 5 µm), and then the top surface and the bottom surface of the pellet sample of a sintered body was subjected to mirror polishing to form electrodes. A conductive Ag paste was applied to both surfaces, and sufficiently dried at 150°C. The dried pellet sample of a sintered body was immobilized in a cell for measurement, and connected to terminals, followed by measuring electroconductivity at room temperature using the AC impedance technique. The electroconductivity was measured at room temperature with an impedance meter (HP4194A) with the frequency range of the impedance meter set at 100 Hz to 10 MHz. The correlation between the electroconductivity and the temperature was plotted (Arrhenius plot) by a complex impedance analysis, thereby measuring electroconductivity.

### Examples

The following describes the present invention in detail with reference to Examples and Comparative Examples. However, the present invention is not limited to these Examples.

### Examples 1-1 to 1-15

Predetermined amounts of Li₂CO₃, ZrO₂, CaCO₃, and NH₄H₂PO₄ (starting materials) were weighed such that the composition of each Example after sintering was as shown in Table 1 by changing the amount of only phosphorus.

Subsequently, these weighed substances were placed in a pot mill made of zirconia, and mixed for 16 hours to prepare a powder mixture. The mixture was then calcined at 800°C in air atmosphere, and pulverized, thereby preparing a calcined powder.

The calcined powder was molded with a die at a pressure of 100 MPa, and sintered at a temperature of 800 to 1500°C as shown in Table 1, thereby obtaining a sintered body of a lithium-containing zirconium phosphate (sample).

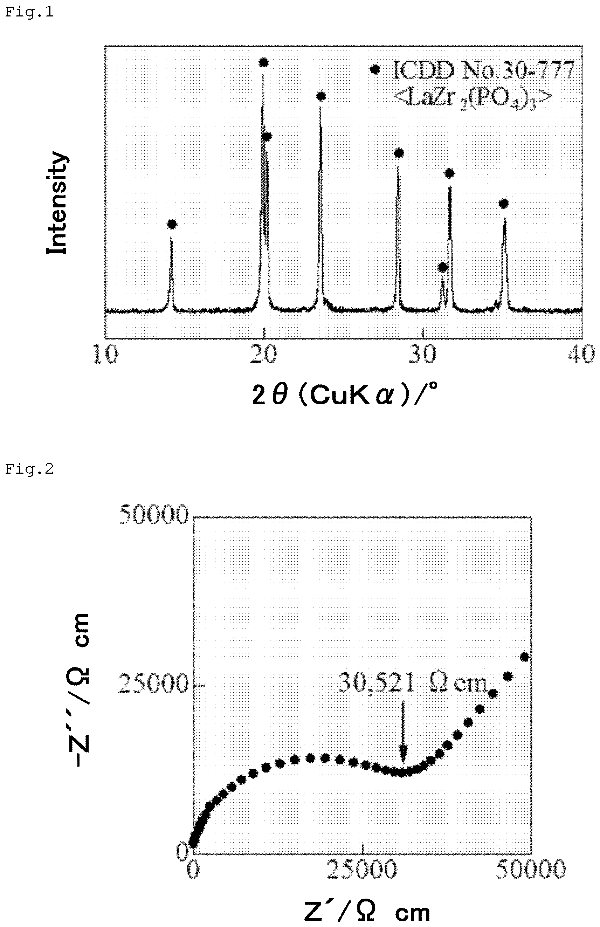

The lithium-containing zirconium phosphate of all Examples shown in Table 1 was subjected to powder X-ray diffraction measurement, and the results indicate that the main constituent phase of all Examples had the nasicon structure. Fig. 1 shows a powder X-ray diffraction pattern of the lithium-containing zirconium phosphate at room temperature obtained in Example 1-4. From Fig. 1, the main constituent phase is also confirmed to have the nasicon structure.

### Examples 2-1 to 2-8

Predetermined amounts of Li₂CO₃, ZrO₂, CaCO₃, and NH₄H₂PO₄ (starting materials) were weighed such that the composition of each Example after sintering was as shown in Table 2 by changing the amount of only lithium.

Subsequently, sample preparation and sample evaluation (powder X-ray diffraction measurement) were performed in the same manner as in Example 1.

The results of the powder X-ray diffraction measurement performed on the lithium-containing zirconium phosphate of all Examples shown in Table 2 indicate that the main constituent phase of all Examples had the nasicon structure.

### Examples 3-1 to 3-6

Predetermined amounts of Li₂CO₃, ZrO₂, CaCO₃, and NH₄H₂PO₄ (starting materials) were weighed such that the composition of each Example after sintering was as shown in Table 3 by changing the amount of only M¹ (Ca).

Subsequently, sample preparation and sample evaluation (powder X-ray diffraction measurement) were performed in the same manner as in Example 1.

The results of the powder X-ray diffraction measurement performed on the lithium-containing zirconium phosphate of all Examples shown in Table 3 indicate that the main constituent phase of all Examples had the nasicon structure.

### Examples 4-1 to 4-4

Predetermined amounts of Li₂CO₃, ZrO₂, MgO, CaCO₃, SrCO₃, BaCO₃, and NH₄H₂PO₄ (starting materials) were weighed such that the composition of each Example after sintering was as shown in Table 4 by changing the type of only M¹.

Subsequently, sample preparation and sample evaluation (powder X-ray diffraction measurement) were performed in the same manner as in Example 1.

The results of the powder X-ray diffraction measurement performed on the lithium-containing zirconium phosphate of all Examples shown in Table 4 indicate that the main constituent phase of all Examples had the nasicon structure.

### Examples 5-1 to 5-6

Predetermined amounts of Li₂CO₃, ZrO₂, MgO, CaCO₃, and NH₄H₂PO₄ (starting materials) were weighed such that the composition of each Example after sintering was as shown in Table 5 by changing the type and content of M¹.

Subsequently, sample preparation and sample evaluation (powder X-ray diffraction measurement) were performed in the same manner as in Example 1.

The results of the powder X-ray diffraction measurement performed on the lithium-containing zirconium phosphate of all Examples shown in Table 5 indicate that the main constituent phase of all Examples had the nasicon structure.

### Examples 6-1 to 6-6

Predetermined amounts of Li₂CO₃, ZrO₂, CaCO₃, SrCO₃, and NH₄H₂PO₄ (starting materials) were weighed such that the composition of each Example after sintering was as shown in Table 6 by changing the type and content of M¹.

Subsequently, sample preparation and sample evaluation (powder X-ray diffraction measurement) were performed in the same manner as in Example 1.

The results of the powder X-ray diffraction measurement performed on the lithium-containing zirconium phosphate of all Examples shown in Table 6 indicate that the main constituent phase of all Examples had the nasicon structure.

### Examples 7-1 to 7-4

Predetermined amounts of Li₂CO₃, ZrO₂, BaCO₃, SrCO₃, and NH₄H₂PO₄ (starting materials) were weighed such that the composition of each Example after sintering was as shown in Table 7 by changing the type and content of M¹.

Subsequently, sample preparation and sample evaluation (powder X-ray diffraction measurement) were performed in the same manner as in Example 1.

The results of the powder X-ray diffraction measurement performed on the lithium-containing zirconium phosphate of all Examples shown in Table 7 indicate that the main constituent phase of all Examples had the nasicon structure.

### Examples 8-1 to 8-24

Predetermined amounts of Li₂CO₃, ZrO₂, Al₂O₃, Sc₂O₃, Y₂O₃, La₂O₃, Pr₆O₁₁, Nd₂O₃, Sm₂O₃, Eu₂O₃, Gd₂O₃, Tb₄O₇, Dy₂O₃, Ho₂O₃, Er₂O₃, Tm₂O₃, Yb₂O₃, Lu₂O₃, CaCO₃, and NH₄H₂PO₄ (starting materials) were weighed such that the composition of each Example after sintering was as shown in Table 8 by changing the type of M¹ and the type and content of M².

Subsequently, sample preparation and sample evaluation (powder X-ray diffraction measurement) were performed in the same manner as in Example 1.

The results of the powder X-ray diffraction measurement performed on the lithium-containing zirconium phosphate of all Examples shown in Table 8 indicate that the main constituent phase of all Examples had the nasicon structure.

### Comparative Examples 1 to 8

Predetermined amounts of Li₂CO₃, ZrO₂, CaCO₃, and NH₄H₂PO₄ (starting materials) were weighed such that the composition of each Example after sintering was as shown in Table 9 by changing the content of M¹ and the content of P.

Subsequently, sample preparation and sample evaluation (powder X-ray diffraction measurement) were performed in the same manner as in Example 1.

The results of the powder X-ray diffraction measurement performed on the lithium-containing zirconium phosphate of all Examples shown in Table 9 indicate that the main constituent phase of all Examples had the nasicon structure.

### Comparative Example 9

An oxalic acid crystal (H₂C₂O₄·2H₂O) aqueous solution was added to a zirconium oxychloride (a ZrOCl₂·8H₂O reagent) aqueous solution while stirring, and an ammonium hydrogenphosphate aqueous solution was then added thereto while stirring, followed by maintaining the mixture in a thermostatic room at 96°C for 5 days. The obtained reaction product was filtered, and washed, followed by heat treatment at 650°C for 3 hours, thereby obtaining zirconium phosphate with the nasicon structure.

The obtained zirconium phosphate was dispersed in deionized water, and 100 mL of an aqueous solution containing Li ions and Ca ions was added thereto to achieve the composition shown in Table 9. The mixture was placed in an autoclave, and subjected to hydrothermal synthesis at 250°C (autoclave treatment temperature) for 24 hours, thereby obtaining a sample.

Subsequently, sample evaluation (powder X-ray diffraction measurement) was performed in the same manner as in Example 1.

The results of the powder X-ray diffraction measurement performed on the obtained lithium-containing zirconium phosphate indicate that the main constituent phase had the nasicon structure.

### Test Example 1: Evaluation of Characteristics of Lithium-containing Zirconium Phosphate

Each sample of the lithium-containing zirconium phosphate obtained in the Examples and Comparative Examples was subjected to composition analysis, weight loss measurement by thermogravimetric analysis, three-point bending strength measurement, and room-temperature resistivity measurement. Tables 1 to 9 show the results.

The test methods and the evaluation methods are as described below.

### Composition Analysis

The composition analysis was performed as follows. A 10% hydrofluoric acid solution was added to a 100-L beaker made of Teflon®. Each sample was pulverized in a silicon nitride mortar, and 0.1 g of the sample was added to the beaker, heated, and dissolved. The solution of the sample was adjusted to 100 mL in total with a volumetric flask, and the quantitative value was converted to a molar ratio using an inductively coupled plasma spectrometer.

### Weight Loss

The thermostability was analyzed as follows. Thermogravimetric measurement was performed with a differential thermal scale (TG-DTA8120, Rigaku Corporation) from room temperature to 1500°C (at a temperature increase rate of 10°C/minute in air atmosphere), and the weight loss was calculated. From the standpoint of applications of lithium-ion-conducting solid electrolyte materials, the acceptable range of weight loss is less than 1.0 wt.%, and preferably 0.6wt.% or less.

### Three-point Flexural Strength Measurement

The three-point bending strength was measured in accordance with a testing method for bending strength of fine ceramics (JIS R1601). From the standpoint of applications of lithium-ion-conducting solid electrolyte materials, the acceptable range of three-point bending strength is 20 MPa or more.

### Room-temperature Resistivity Measurement

The room-temperature resistivity was determined as described below.

First, a pellet sample of a sintered body was prepared from each calcined powder (particle size: about 0.3 to 10 µm, and preferably about 0.3 to 5 µm). Subsequently, the top surface and the bottom surface of each pellet sample of a sintered body was subjected to mirror polishing to form electrodes, and a conductive Ag paste was applied to both surfaces, followed by sufficiently drying the paste at 150°C. The dried pellet sample of a sintered body was cooled to room temperature, immobilized in a cell for measurement, and connected to terminals, followed by measuring electroconductivity at room temperature using the AC impedance technique.

The electroconductivity was measured at room temperature with an impedance meter (HP4194A), with the frequency range of the impedance meter set at 100 Hz to 10 MHz. The correlation between the electroconductivity and the temperature was plotted (Arrhenius plot) by a complex impedance analysis, thereby measuring electroconductivity. From the standpoint of applications of lithium-ion-conducting solid electrolyte materials, the acceptable range of room-temperature resistivity is 100000 Ω·cm or less.

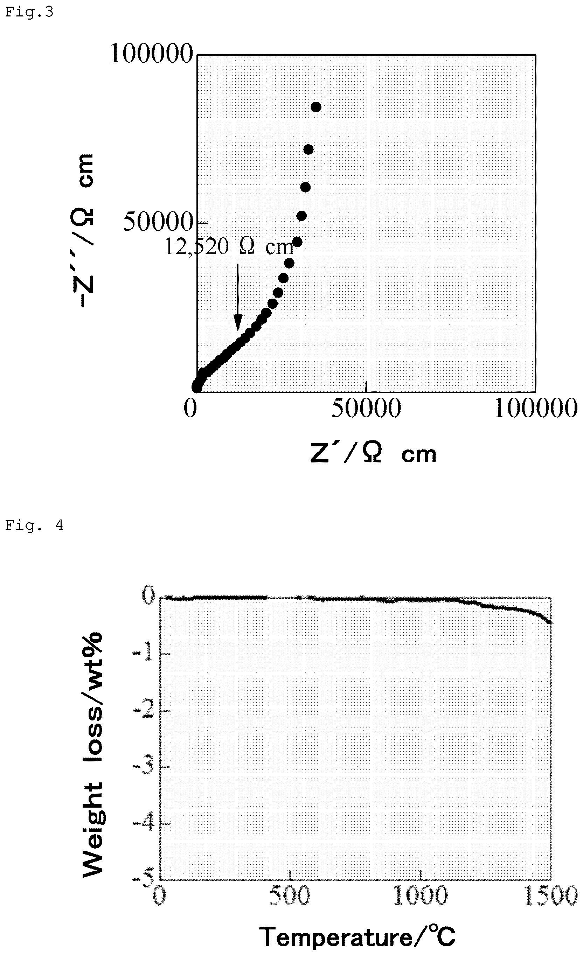

Fig. 2 and Fig. 3 show typical complex impedance plots of the lithium-containing zirconium phosphate according to the present invention (Fig. 2 for Example 1-4, and Fig. 3 for Example 8-23). Both figures show a single arc in the high frequency side, and a Warburg impedance in the low frequency side. The Warburg impedance in the low frequency side appears to be due to the resistance that occurred between the electrolyte and the electrode interface. Although the single arc in the high frequency side appears to be a clear arc, the arc would be a combination of an arc due to intragranular resistance (the high frequency side) and an arc due to grain-boundary resistance (the low frequency side).

**Table 1**

| Sample No. | Compositional Ratio (Molar Ratio) | | | | Sintering Temperature (°C) | Weight Loss (wt.%) | Pellet | |
|---|---|---|---|---|---|---|---|---|
| | Li | M¹ | M² | P | | | Three-point Flexural Strength (MPa) | Room-temperature Resistivity (Ω·cm) |
| | | Only Ca | Only Zr | | | | | |
| Example 1-1 | 1.4 | 0.25 | 2.0 | **3.05** | 1100 | 0.36 | 22 | 89,250 |
| Example 1-2 | 1.4 | 0.25 | 2.0 | **3.10** | 1100 | 0.42 | 21 | 54,020 |
| Example 1-3 | 1.4 | 0.25 | 2.0 | **3.15** | 1100 | 0.43 | 22 | 51,005 |
| Example 1-4 | 1.4 | 0.25 | 2.0 | **3.20** | 1100 | 0.41 | 25 | 30,520 |
| Example 1-5 | 1.4 | 0.25 | 2.0 | **3.25** | 1100 | 0.42 | 24 | 56,070 |
| Example 1-6 | 1.4 | 0.25 | 2.0 | **3.30** | 1100 | 0.43 | 23 | 76,030 |
| Example 1-7 | 1.4 | 0.25 | 2.0 | **3.40** | 1100 | 0.40 | 23 | 95,665 |
| Example 1-8 | 1.4 | 0.25 | 2.0 | **3.50** | 1100 | 0.49 | 22 | 98,280 |
| Example 1-9 | 1.4 | 0.25 | 2.0 | 3.20 | **800** | 0.49 | 21 | 97,800 |
| Example 1-10 | 1.4 | 0.25 | 2.0 | 3.20 | **900** | 0.48 | 21 | 93,500 |
| Example 1-11 | 1.4 | 0.25 | 2.0 | 3.20 | **1000** | 0.41 | 22 | 45,630 |
| Example 1-12 | 1.4 | 0.25 | 2.0 | 3.20 | **1200** | 0.40 | 26 | 48,600 |
| Example 1-13 | 1.4 | 0.25 | 2.0 | 3.20 | **1300** | 0.39 | 26 | 67,940 |
| Example 1-14 | 1.4 | 0.25 | 2.0 | 3.20 | **1400** | 0.10 | 22 | 76,300 |
| Example 1-15 | 1.4 | 0.25 | 2.0 | 3.20 | **1500** | 0.02 | 23 | 98,390 |

**Table 2**

| Sample No. | Compositional Ratio (Molar Ratio) | | | | Sintering Temperature (°C) | Weight Loss (wt.%) | Pellet | |
|---|---|---|---|---|---|---|---|---|
| | Li | M¹ | M² | P | | | Three-point Flexural Strength (MPa) | Room-temperature Resistivity (Ω·cm) |
| | | Only Ca | Only Zr | | | | | |
| Example 2-1 | **1.0** | 0.25 | 2.0 | 3.20 | 1100 | 0.40 | 22 | 95,700 |
| Example 2-2 | **1.1** | 0.25 | 2.0 | 3.20 | 1100 | 0.36 | 21 | 89,620 |
| Example 2-3 | **1.2** | 0.25 | 2.0 | 3.20 | 1100 | 0.44 | 24 | 63,855 |
| Example 2-4 | **1.3** | 0.25 | 2.0 | 3.20 | 1100 | 0.47 | 23 | 40,560 |
| Example 2-5 | **1.4** | 0.25 | 2.0 | 3.20 | 1100 | 0.41 | 25 | 30,520 |
| Example 2-6 | **1.5** | 0.25 | 2.0 | 3.20 | 1100 | 0.41 | 24 | 41,300 |
| Example 2-7 | **1.6** | 0.25 | 2.0 | 3.20 | 1100 | 0.48 | 26 | 60,555 |
| Example 2-8 | **1.7** | 0.25 | 2.0 | 3.20 | 1100 | 0.40 | 26 | 99,870 |

**Table 3**

| Sample No. | Compositional Ratio (Molar Ratio) | | | | Sintering Temperature (°C) | Weight Loss (wt.%) | Pellet | |
|---|---|---|---|---|---|---|---|---|
| | Li | M¹ | M² | P | | | Three-point Flexural Strength (MPa) | Room-temperature Resistivity (Ω·cm) |
| | | Only Ca | Only Zr | | | | | |
| Example 3-1 | 1.4 | **0.10** | 2.0 | 3.20 | 1100 | 0.31 | 21 | 91,320 |
| Example 3-2 | 1.4 | **0.15** | 2.0 | 3.20 | 1100 | 0.40 | 24 | 80,600 |
| Example 3-3 | 1.4 | **0.20** | 2.0 | 3.20 | 1100 | 0.49 | 26 | 49,055 |
| Example 3-4 | 1.4 | **0.25** | 2.0 | 3.20 | 1100 | 0.41 | 25 | 30,520 |
| Example 3-5 | 1.4 | **0.30** | 2.0 | 3.20 | 1100 | 0.48 | 24 | 58,010 |
| Example 3-6 | 1.4 | **0.35** | 2.0 | 3.20 | 1100 | 0.48 | 23 | 57,620 |

**Table 4**

| Sample No. | Compositional Ratio (Molar Ratio) | | | | Sintering Temperature (°C) | Weight Loss (wt.%) | Pellet | |
|---|---|---|---|---|---|---|---|---|
| | Li | M¹ | M² | P | | | Three-point Flexural Strength (MPa) | Room-temperature Resistivity (Ω·cm) |
| | | | Only Zr | | | | | |
| Example 4-1 | 1.4 | **Mg 0.25** | 2.0 | 3.20 | 1100 | 0.38 | 22 | 72,620 |
| Example 4-2 | 1.4 | **Ca 0.25** | 2.0 | 3.20 | 1100 | 0.41 | 25 | 30,520 |
| Example 4-3 | 1.4 | **Sr 0.25** | 2.0 | 3.20 | 1100 | 0.37 | 25 | 81,340 |
| Example 4-4 | 1.4 | **Ba 0.25** | 2.0 | 3.20 | 1100 | 0.42 | 26 | 60,745 |

**Table 5**

| Sample No. | Compositional Ratio (Molar Ratio) | | | | | Sintering Temperature (°C) | Weight Loss (wt.%) | Pellet | |
|---|---|---|---|---|---|---|---|---|---|
| | Li | M¹ | | M² | P | | | Three-point Flexural Strength (MPa) | Room-temperature Resistivity (Ω·cm) |
| | | Ca | Mg | Only Zr | | | | | |
| Example 5-1 | 1.4 | **0.25** | **0** | 2.0 | 3.20 | 1100 | 0.41 | 25 | 30,520 |
| Example 5-2 | 1.4 | **0.20** | **0.05** | 2.0 | 3.20 | 1100 | 0.39 | 24 | 40,570 |
| Example 5-3 | 1.4 | **0.15** | **0.10** | 2.0 | 3.20 | 1100 | 0.46 | 26 | 51,800 |
| Example 5-4 | 1.4 | **0.10** | **0.15** | 2.0 | 3.20 | 1100 | 0.43 | 24 | 58,220 |
| Example 5-5 | 1.4 | **0.05** | **0.20** | 2.0 | 3.20 | 1100 | 0.44 | 23 | 62,320 |
| Example 5-6 | 1.4 | **0** | **0.25** | 2.0 | 3.20 | 1100 | 0.40 | 24 | 90,430 |

**Table 6**

| Sample No. | Compositional Ratio (Molar Ratio) | | | | | Sintering Temperature (°C) | Weight Loss (wt.%) | Pellet | |
|---|---|---|---|---|---|---|---|---|---|
| | Li | M¹ | | M² | P | | | Three-point Flexural Strength (MPa) | Room-temperature Resistivity (Ω·cm) |
| | | Sr | Ca | Only Zr | | | | | |
| Example 6-1 | 1.4 | **0.25** | **0** | 2.0 | 3.20 | 1100 | 0.46 | 26 | 98,500 |
| Example 6-2 | 1.4 | **0.20** | **0.05** | 2.0 | 3.20 | 1100 | 0.44 | 27 | 87,300 |
| Example 6-3 | 1.4 | **0.15** | **0.10** | 2.0 | 3.20 | 1100 | 0.38 | 25 | 82,330 |
| Example 6-4 | 1.4 | **0.10** | **0.15** | 2.0 | 3.20 | 1100 | 0.35 | 25 | 62,285 |
| Example 6-5 | 1.4 | **0.05** | **0.20** | 2.0 | 3.20 | 1100 | 0.44 | 24 | 47,690 |
| Example 6-6 | 1.4 | **0** | **0.25** | 2.0 | 3.20 | 1100 | 0.41 | 25 | 30,520 |

**Table 7**

| Sample No. | Compositional Ratio (Molar Ratio) | | | | | Sintering Temperature (°C) | Weight Loss (wt.%) | Pellet | |
|---|---|---|---|---|---|---|---|---|---|
| | Li | M¹ | | M² | P | | | Three-point Flexural Strength (MPa) | Room-temperature Resistivity (Ω·cm) |
| | | Ba | Sr | Only Zr | | | | | |
| Example 7-1 | 1.4 | 0.25 | 0 | 2.0 | 3.20 | 1100 | 0.42 | 26 | 92,200 |
| Example 7-2 | 1.4 | 0.15 | 0.10 | 2.0 | 3.20 | 1100 | 0.39 | 25 | 87,300 |
| Example 7-3 | 1.4 | 0.10 | 0.15 | 2.0 | 3.20 | 1100 | 0.38 | 25 | 82,200 |
| Example 7-4 | 1.4 | 0 | 0.25 | 2.0 | 3.20 | 1100 | 0.37 | 25 | 71,600 |

**Table 8**

| Sample No. | Compositional Ratio (Molar Ratio) | | | | | Sintering Temperature (°C) | Weight Loss (wt.%) | Pellet | |
|---|---|---|---|---|---|---|---|---|---|
| | Li | M¹ | M² | | P | | | Three-point Flexural Strength (MPa) | Room-temperature Resistivity (Ω·cm) |
| | | | Zr | X | | | | | |
| Example 8-1 | 1.4 | Ca 0.25 | **2.0** | **0** | 3.20 | 1100 | 0.41 | 25 | 30,520 |
| Example 8-2 | 1.4 | Ca 0.25 | **1.9** | **Er 0.1** | 3.20 | 1100 | 0.42 | 21 | 29,890 |
| Example 8-3 | 1.4 | Ca 0.25 | **1.8** | **Er 0.2** | 3.20 | 1100 | 0.43 | 22 | 27,330 |
| Example 8-4 | 1.4 | Ca 0.25 | **1.7** | **Er 0.3** | 3.20 | 1100 | 0.54 | 22 | 25,470 |
| Example 8-5 | 1.4 | Ca 0.25 | **1.6** | **Er 0.4** | 3.20 | 1100 | 0.42 | 24 | 40,300 |
| Example 8-6 | 1.4 | Ca 0.25 | **1.5** | **Er 0.5** | 3.20 | 1100 | 0.43 | 23 | 89,500 |
| Example 8-7 | 1.4 | Ca 0.25 | **1.7** | **Al 0.3** | 3.20 | 1100 | 0.54 | 21 | 67,890 |
| Example 8-8 | 1.4 | Ca 0.25 | **1.7** | **Sc 0.3** | 3.20 | 1100 | 0.42 | 22 | 28,320 |
| Example 8-9 | 1.4 | Ca 0.25 | **1.7** | **Y 0.3** | 3.20 | 1100 | 0.43 | 22 | 36,410 |
| Example 8-10 | 1.4 | Ca 0.25 | **1.7** | **La 0.3** | 3.20 | 1100 | 0.40 | 22 | 40,120 |
| Example 8-11 | 1.4 | Ca 0.25 | **1.7** | **Pr 0.3** | 3.20 | 1100 | 0.41 | 24 | 29,670 |
| Example 8-12 | 1.4 | Ca 0.25 | **1.7** | **Nd 0.3** | 3.20 | 1100 | 0.42 | 25 | 39,420 |
| Example 8-13 | 1.4 | Ca 0.25 | **1.7** | **Sm 0.3** | 3.20 | 1100 | 0.41 | 22 | 60,880 |
| Example 8-14 | 1.4 | Ca 0.25 | **1.7** | **Eu 0.3** | 3.20 | 1100 | 0.50 | 24 | 40,340 |
| Example 8-15 | 1.4 | Ca 0.25 | **1.7** | **Gd 0.3** | 3.20 | 1100 | 0.42 | 23 | 36,520 |
| Example 8-16 | 1.4 | Ca 0.25 | **1.7** | **Tb 0.3** | 3.20 | 1100 | 0.39 | 22 | 40,630 |
| Example 8-17 | 1.4 | Ca 0.25 | **1.7** | **Dy 0.3** | 3.20 | 1100 | 0.38 | 23 | 33,470 |
| Example 8-18 | 1.4 | Ca 0.25 | **1.7** | **Ho 0.3** | 3.20 | 1100 | 0.42 | 24 | 36,540 |
| Example 8-19 | 1.4 | Ca 0.25 | **1.7** | **Tm 0.3** | 3.20 | 1100 | 0.51 | 21 | 20,690 |
| Example 8-20 | 1.4 | Ca 0.25 | **1.7** | **Yb 0.3** | 3.20 | 1100 | 0.41 | 22 | 8,630 |
| Example 8-21 | 1.4 | Mg 0.25 | **1.7** | **Yb 0.3** | 3.20 | 1100 | 0.42 | 22 | 15,435 |
| Example 8-22 | 1.4 | Sr 0.25 | **1.7** | **Yb 0.3** | 3.20 | 1100 | 0.42 | 22 | 19,340 |
| Example 8-23 | 1.4 | Ba 0.25 | **1.7** | **Yb 0.3** | 3.20 | 1100 | 0.42 | 21 | 12,520 |
| Example 8-24 | 1.4 | Ca 0.25 | **1.7** | **Lu 0.3** | 3.20 | 1100 | 0.42 | 22 | 19,500 |

**Table 9**

| Sample No. | Compositional Ratio (Molar Ratio) | | | | | Sintering Temperature (°C) | Weight Loss (wt.%) | Pellet | |
|---|---|---|---|---|---|---|---|---|---|
| | Li | M¹ | M² | | P | | | Three-point Flexural Strength (MPa) | Room-temperature Resistivity (Ω·cm) |
| | | | Zr | X | | | | | |
| Comparative Example 1 | 1.4 | Ca 0.25 | 2.0 | 0 | **2.90** | 1100 | 0.29 | **12** | 401,330 |
| Comparative Example 2 | 1.4 | Ca 0.25 | 2.0 | 0 | **3.55** | 1100 | 0.26 | **17** | 304,250 |
| Comparative Example 3 | 1.4 | Ca 0.25 | 2.0 | 0 | **3.00** | 1100 | 0.21 | **16** | 390,755 |
| Comparative Example 4 | 1.4 | Ca 0.25 | 2.0 | 0 | 3.20 | **1600** | **0.06** | **19** | 171,045 |
| Comparative Example 5 | 1.4 | Ca 0.25 | 2.0 | 0 | 3.20 | **700** | **0.34** | **17** | 604,200 |
| Comparative Example 6 | **0.9** | Ca 0.25 | 2.0 | 0 | 3.20 | 1100 | **0.31** | **13** | 200,200 |
| Comparative Example 7 | **1.8** | Ca 0.25 | 2.0 | 0 | 3.20 | 1100 | **0.28** | **18** | 116,200 |
| Comparative Example 8 | 1.4 | Ca **0.08** | 2.0 | 0 | 3.20 | 1100 | **0.30** | **14** | 528,100 |
| Comparative Example 9 | 1.4 | Ca 0.25 | 2.0 | 0 | 3.20 | 1100 | **0.36** | **11** | 227,885 |

As is clear from the results of Tables 1 to 8, the lithium-containing zirconium phosphate of Examples had acceptable characteristics in all of the weight loss, three-point bending strength, and room-temperature resistivity, from the standpoint of applications of lithium-ion-conducting solid electrolyte materials. However, as seen in the results of Table 9, lithium-containing zirconium phosphate whose compositional ratio is outside the predetermined range of the present invention and lithium-containing zirconium phosphate prepared without meeting a predetermined production condition in the production step of the present invention failed to have at least one characteristic of the weight loss, three-point bending strength, and room-temperature resistivity within their acceptable range.

## Claims

1. A lithium-containing zirconium phosphate, **characterized in that**
(1) the lithium-containing zirconium phosphate has a compositional ratio of Li:M¹:M²:P=1.0 to 1.7:0.10 to 0.35:2.0:more than 3.00 to 3.50 or less;
(2) M¹ contains at least one member selected from the group consisting of Ca, Mg, Sr, and Ba; when M¹ contains two or more members, the ratio of M¹ is 0.10 to 0.35 in total; and
(3) M² contains Zr alone, or contains Zr and at least one member selected from the group consisting of Al, Sc, Y, La, Pr, Nd, Sm, Eu, Gd, Tb, Dy, Ho, Er, Tm, Yb, and Lu, the ratio of Zr in M² being 1.47 to 2.00.

2. The lithium-containing zirconium phosphate according to claim 1, wherein the lithium-containing zirconium phosphate has a compositional ratio of Li:M¹:M²:P=1.1 to 1.6:0.15 to 0.35:2.0:3.05 to 3.50.

3. The lithium-containing zirconium phosphate according to claim 1 or 2, wherein when the lithium-containing zirconium phosphate in a powder form is heated at a temperature increase rate of 10°C/minute in air atmosphere, the total weight loss of Li and P is less than 1.0 wt.% within the entire temperature range from room temperature, which is a start point, to 1500°C, which is an end point.

4. The lithium-containing zirconium phosphate according to claim 1 or 2, wherein the lithium-containing zirconium phosphate has a resistivity of 100000 Ω·cm or less at room temperature.

5. The lithium-containing zirconium phosphate according to claim 1 or 2, wherein the lithium-containing zirconium phosphate has a three-point bending strength of 20 MPa or more.

6. A method for producing a calcined powder of a lithium-containing zirconium phosphate, **characterized in that**
(1) the calcined powder has a compositional ratio of Li:M¹:M²:P=1.0 to 1.7:0.10 to 0.35:2.0:more than 3.00 to 3.50 or less;
(2) M¹ contains at least one member selected from the group consisting of Ca, Mg, Sr, and Ba; when M¹ contains two or more members, the ratio of M¹ is 0.10 to 0.35 in total;
(3) M² contains Zr alone, or contains Zr and at least one member selected from the group consisting of Al, Sc, Y, La, Pr, Nd, Sm, Eu, Gd, Tb, Dy, Ho, Er, Tm, Yb, and Lu, the ratio of Zr in M² being 1.47 to 2.00; and
(4) the method comprises mixing powdery starting materials containing inorganic compounds that are a Li source, a M¹ source, a M² source, and a P source, and calcining the obtained mixture of the powdery starting materials at a temperature of 800°C or higher.

7. A method for producing a sintered body of the lithium-containing zirconium phosphate of any one of claims 1 to 5, the method comprising
preparing a calcined powder by the method for producing a calcined powder of claim 6,
molding the calcined powder, and
sintering the molded calcined powder at 800 to 1500°C to prepare a sintered body.
